# EUROPÄISCHE PATENTANMELDUNG

(11) **EP 0 622 577 A1**
(43) Veröffentlichungstag der Anmeldung: **02.11.1994**
(21) Anmeldenummer: 94103980.2
(22) Anmeldetag: 15.03.1994
(51) Int. Cl.: F16L 21/03

(54) **Rohrverbindung mit einem Luftpolsterdichtring**

(30) Priorität: 28.04.1993 DE 4313957
(71) Anmelder: THYSSEN POLYMER GMBH, D-81671 München (DE)
(72) Erfinder: Bauer, Peter, D-94357 Konzell (DE); Jirka, Karl, D-81739 München (DE); Helf, Walter, D-94315 Straubing (DE)

(57) **Zusammenfassung**

Die Erfindung bezieht sich auf eine Rohrverbindung mit einem Dichtring (4) der als Luftpolsterring ausgebildet ist und in eine umlaufende Nut der Rohrmuffe (3) eingesetzt ist, wobei zusätzlich mehrere umlaufende Kammern (8,9,10,16) vorgesehen sind, die zwischen dem Außendurchmesser des Einsteckendes (1) und der Innenkontur der Rohrmuffe angeordnet sind und in der Wirkstellung der Rohrverbindung teils asymmetrische und teils symmetrische Formen unterschiedlicher Volumina aufweisen.

## Beschreibung

Die Erfindung betrifft eine Rohrverbindung mit einem Luftpolsterdichtring, der in der Ruhe- und Wirkstellung der Rohrverbindung als Luftpolsterring wirkt und mit einer oder mehreren in den Verbindungsbereich der Rohre ragenden umlaufenden Dichtrippen ausgebildet ist, mindestens eine nach hinten als Fortsatz ragende Dichtlippe aufweist und in eine umlaufende Nut der Rohrmuffe eingesetzt ist.

Rohrverbindungen mit Luftpolsterdichtringen sind an sich bekannt. Sie dienen z.B. zur Abdichtung von Kabelkanalrohrverbindungen, wie beispielsweise gem. DE GM 87 04 601.6 und bestehen u.a. aus einem elastischen Werkstoff mit einem weichen und einem harten Abschnitt, wie die DE PS 34 11 462 C2 zeigt oder benötigen u.U. zusätzliche Stützringe. Nach Einschieben des Einsteckendes in den Muffenbereich werden die Luftpolster und Dichtringe meist in der umlaufenden Ringnut der Muffe zusammengepreßt und somit wirkungslos. Auch werden bei den bekannten Dichtringen, die in den Verbindungsbereich der beiden Rohre ragenden umlaufenden Rippen beim Einschieben des Einsteckendes meist total zusammengepreßt, so daß eine differenzierte Dichtwirkung nicht zu erzielen ist. Ein weiterer, beson ders störender Nachteil bekannter Rohrverbindungen mit Luftpolster- und sonstigen Dichtringen ist, daß in den Verbindungsbereich eingedrungener Schmutz die Funktion des Dichtringes beeinträchtigen kann, da die ursprünglich vorhandenen Freiräume in der Wirkstellung der Rohrverbindung nicht verbleiben.

Hier setzt die Erfindung ein. Die Erfindung, wie sie in den Ansprüchen beschrieben ist, löst die Aufgabe, eine dichte Rohrverbindung vorzugsweise für Kabelkanalrohre zu schaffen, bei der Schmutz nicht in den eigentlichen Dichtungsbereich der Rohrmuffe eindringen kann, die Einschub- und Ausziehkraft beim Einstecken bzw. Herausziehen des Rohrendes gering bleibt und der Dichtring nicht vorzeitig altert und auch bei schrägem Einstecken des Einsteckendes eines Rohres in die Muffe, nicht aus seiner Lage geschoben werden kann.

Die mit der Erfindung erzielten Vorteile sind insbesondere, der Schutz des Einschub- bzw. Dichtbereiches der Rohverbindung vor eindringenden Schmutz von außen und aus dem Rohrinnenbereich sowie die Verhütung des vorzeitigen Alterns des Luftpolsterdichtringes, da seine Verformung stets im elastischen Bereich stattfindet. Aufgrund der Anordnung der Dichtrippen gegenüber den Wülsten rechts und links der Luftkammer in der umlaufenden Nut der Muffe und nicht gegenüber dieser Luftkammer, sowie der Anordnung weiterer Kammern folgt, daß beim Einschub eines Rohres in den Muffen- bzw. Dichtungsbereich eine Verteilung der Materialmasse des Luftpolsterdichtringes auf die Volumina der angrenzenden Kammern stattfindet. Ein weiterer Vorteil liegt in der Verringerung der erforderlichen Einschub- und Ausziehkraft für das Rohrende, da der Luftpolsterdichtring elastisch nachgibt und die Winkel unter denen die Dichtrippenflanken aufeinander zu laufen kleiner als 90° bzw. am nach hinten ragenden Fortsatz des Dichtringes gleich sind. Schließlich ist von Vorteil, daß eine Kante am Fortsatz des Dichtringes, die eine zusätzliche Luftkammer zwischen dem Dichtring und dem Radius des hinteren Nutendes vorgesehen ist, unter Vorspannung an der Innenkontur der Muffe anliegt und so die Luftpolsterkammer in der umlaufenden Nut der Muffe vor dem Eindringen von Schmutz schützt, während der eingedrungene Schmutz in einen nach hinten offenen Ringspalt zwischen einem Fortsatz des Dichtringes und der Muffenwand, auch bei Beaufschlagung der Rohrverbindung mit Innendruck, eindringen und sich sammeln kann.

Die Erfindung ist nachstehend anhand eines in den Abbildungen dargestellten Ausführungsbeispieles näher erläutert.

Es zeigt:
- Fig. 1: einen Teilschnitt durch eine erfindungsgemäße Rohrverbindung in Ruhestellung und

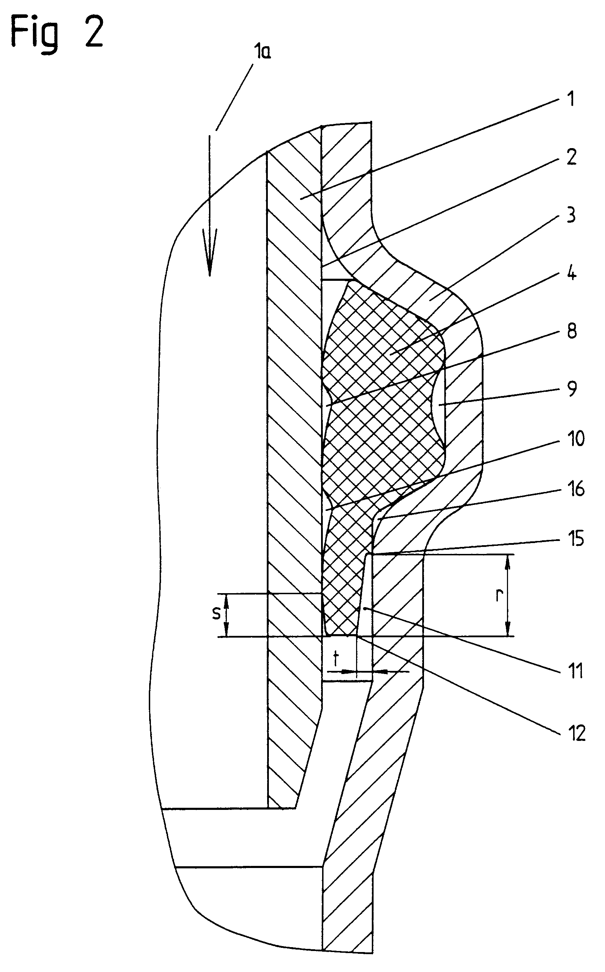

- Fig. 2: die Rohrverbindung gem. Fig. 1 in Wirkstellung.

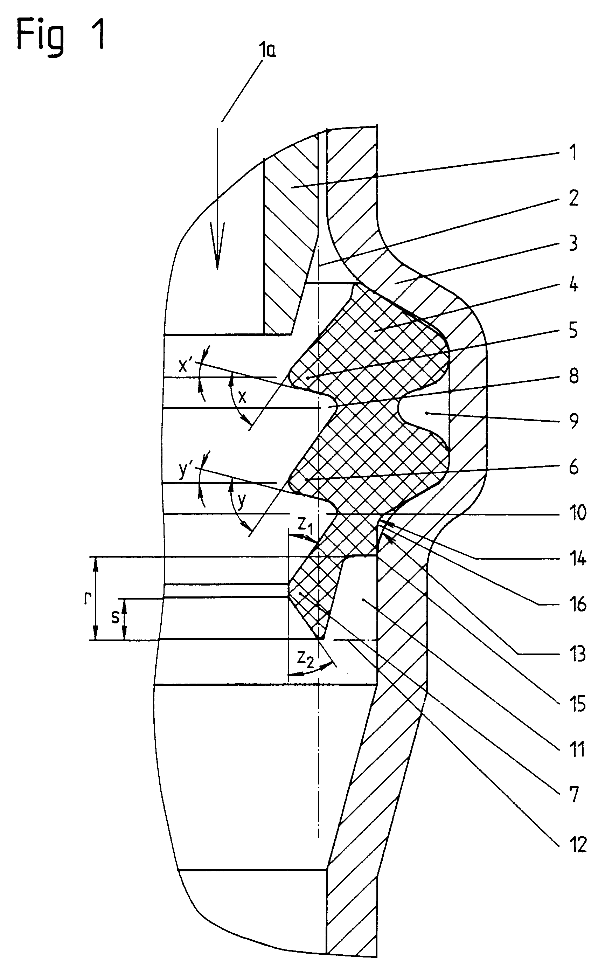

In der in Fig. 1 dargestellten Ruhestellung der Rohrverbindung, d.h. ohne in den Muffenbereich 3 des einen Rohrendes eingeschobene Rohrende 1, ist die Ausbildung der Rohrverbindung und Anordnung des Luftpolsterdichtringes 4 in der Ringnut des Muffenbereiches 3 zu erkennen. Der Luftpolsterdichtring 4 ist so gestaltet, daß, in bekannter Weise, zwischen demselben und der oberen Wand der Ringnut ein Luftpolster in der symmetrischen Kammer 9 zwischen zwei Wülsten eingeschlossen ist. Diesen Wülsten gegenüber besitzt der Körper des Dichtringes 4 zwei umlaufende Rippen 5 und 6, die, nach Einschieben des Rohrendes 1 in Richtung 1a in den Muffenbereich 3, entlang der Fluchtli-nie 2, zwischen sich und der Außenwand des Rohrendes 1 eine mit Luft gefüllte asymmetrische Kammer 8 bilden, eine weitere solche asymmetrische Kammer 10 wird dabei von der umlaufenden Rippe 6 und dem nach innen weisenden, auf der Innenwand des Rohrendes 1 aufliegenden Fläche des Fortsatzes 7 des Dichtringes 4 gebildet. Dieser Kammer gegenüber befindet sich an dem Radius 13 des Muffenbereiches 3 eine weitere Kammer 16, deren Begrenzung die umlaufende Kante 15 des Dichtringes 4 bildet, wobei der Radius 13 des Muffenbereiches 3 gegenüber dem Radius 14 des Dichtringes 4 größer ist und die umlaufende Kante 15 unter Vorspannung an der Muffenwand anliegt.

Der Luftpolsterdichtring 4 besitzt einen nach hinten ragenden ringförmigen Fortsatz 7, der einen konischen Ringspalt 11 zwischen seiner oberen Fläche "r" und der Muffeninnenwand 3 mit dem hinteren Abstand "t" frei läßt, während in Richtung auf das eingeschobene Rohrende 1 ein kleinerer Ringspalt unterhalb seiner Fläche "s" frei bleibt.

Die Flanken der Dichtrippen 5 und 6 laufen unter Winkeln x und y aufeinander zu, die sowohl gleich groß als auch jeder für sich, kleiner als 90° sind, während die hinteren Flankenwinkel x' und y' etwa zwischen 0° und 15° betragen. Die Winkel z1 und z2 sind jeder für sich jeweils kleiner als 90° und in Ihrer Größe ebenfalls gleich. Dies bringt den Vorteil geringer Einschub- und, im Falle der Winkel z2=z1 besonders geringer Ausziehkräfte, bei Vermeidung des Einrollens des Endes des Fortsatzes 7 beim Herausziehen des Rohres 1.

Wird das Rohr 1 in Richtung 1a in den Muffenbereich 3 eingeschoben, so wird der Luftpolsterdichtring 4 zwar komprimiert, jedoch nur innerhalb seines elastischen Bereiches. Die Kammern 8 und 16 sowie der Ringspalt 11, in gewissem Umfang auch die Luftpolsterkammer 9, werden ebenfalls komprimiert. Die Summe der Volumina der Kammern 8,9,10 und das des Ringspaltes zwischen der Fläche "r" und der Innenwand der Muffe 3 ist dabei größer, als die Summe der verformbaren Querschnitte der Dichtrippen 5, 6 und 7, d.h. die Verformung des Materials des Dichtringes 4 bleibt stets in dessen elastischem Bereich.

Durch den, auch bei voller Verformung des Luftpolsterdichtringes 4 um das Maß "t" offen bleibenden Ringspalt 11, kann, bei Druckbeaufschlagung der Rohrverbindung von Innen, der Innendruck stets in dem Ringspalt 11 wirken, wobei das Produkt aus Innendruck und Fläche "r" immer größer als das Produkt Innendruck und gegenüberliegende Fläche "s" bleibt. Dadurch wird der verformbare Fortsatz 7 stets gegen das Einsteckende 1 gedrückt, ohne es mit seiner hinteren Flanke z2 zu berühren, was ein Einrollen desselben beim Herausziehen des Rohrendes 1 aus dem Muffenbereich 3 verhindert, wobei gleichzeitig die Dichtwirkung voll erhalten bleibt. Dabei ist das Eindringen von Schmutz in den Ringspalt 11 möglich, während das Anliegen der umlaufenden Kante 15 des Dichtringes 4 an der Innenkontur der Muffe 3 unter Vorspannung, ein Eindringen von Schmutz in die Luftpolsterkammer 9 verhindert.

## Patentansprüche

1. Rohrverbindung mit einem Luftpolsterdichtring, der in der Ruhe- und Wirkstellung der Rohrverbindung als Luftpolsterring wirkt und mit einer oder mehreren in den Verbindungsbereich der Rohre ragenden umlaufenden Dichtrippen ausgebildet ist, mindestens eine nach hinten als Fortsatz ragende Dichtlippe aufweist und in eine umlaufende Nut der Rohrmuffe eingesetzt ist, **gekennzeichnet durch** mehrere umlaufende, beidseits zwischen dem Dichtring (4) und dem Außendurchmesser des Einsteckendes (1) eines Rohres und der Innenkontur der Rohrmuffe (3) vorgesehenen Kammern (8,9,10,16) und einen nach hinten offenen Ringspalt (11) zwischen dem Fortsatz (7) des Luftpolsterdichtringes (4) und der Innenwand des Muffenbereiches (3), von denen die asymmetrisch ausgebildete Kammer (8) der symmetrischen Luftpolsterkammer (9) in der umlaufenden Nut der Rohrmuffe (3) etwa gegenüberliegt, und beiden Kammern (8,9) je eine gegenüberliegende weitere asymmetrische Kammer (10,16) nachgeschaltet ist.

2. Rohrverbindung nach Anspruch 1, **dadurch gekennzeichnet**, daß die Summe der Volumina der Kammern (8,9,10,16) und des Ringspaltes (11) über dessen Bereich "r" größer ist, als die Summe der Volumina der verformbaren Bereiche (5,6,7) des Luftpolsterdichtringes (4).

3. Rohrverbindung nach Anspruch 1 und 2, **dadurch gekennzeichnet**, daß umlaufende in den Verbindungsbereich der beiden Rohre (1) und (3) ragende Dichtrippen (5,6) der verformbaren Querschnitte im Bereich des Körpers des Luftpolsterdichtringes ( 4) vor bzw. hinter der Luftpolsterkammer (9) angeordnet sind.

4. Rohrverbindung nach Anspruch 1 bis 3, **dadurch gekennzeichnet**, daß die Länge "r" eines in Einschubrichtung des Einsteckendes (1) hinteren Ringspaltes (11) zwischen dem verformbaren Querschnitt des Fortsatzes (7) des Dichtringes (4) und der Innenkontur der Muffe (3) größer ist als die Länge "s" dieses Fortsatzes (7), der Ringspalt (11) sich in Einschubrichtung konisch erweitert und im Querschnitt (12) nach hinten offen ist, wobei zwischen dem Querschnitt (7) und der Innenkontur im hinteren Bereich der Muffe (3) ein Ringspalt (11) mit der Länge "r" und der Breite "t" im Querschnitt (12) auch bei vollständiger Verformung des Bereiches (7) des Dichtringes (4) durch das Einschubende (1) erhalten bleibt.

5. Rohrverbindung nach Anspruch 1 und einen der folgenden, **dadurch gekennzeichnet**, daß der Luftpolsterdichtring (4) gegenüber der Kammer (10) einen Radius (14) aufweist, der kleiner ist als der gegenüberliegende Radius (13) der Rohrmuffe (3) und die umlaufende Kante (15) des Luftpolsterdichtringes (4) an der Innenkontur der Muffe (3) unter Vorspannung anliegt.

6. Rohrverbindung nach Anspruch 1 und einen der folgenden, **dadurch gekennzeichnet**, daß die beiden Winkel x und y der verformbaren Abschnitte (5,6) des Luftpolsterdichtringes (4) gleich groß und jeder für sich kleiner als 90° sind und die hinteren Flankenwinkel x'und y' zwischen 0° und 15° betragen und die beiden gleichen Winkel z1 und z2 jeder für sich jeweils kleiner als 45° sind.
